# EUROPEAN PATENT SPECIFICATION

(11) **EP 3 354 499 B1**
(45) Date of publication and mention of the grant of the patent: **10.11.2021**
(21) Application number: 17153034.8
(22) Date of filing: 25.01.2017
(51) Int. Cl.: B60L 58/16, B60L 58/21, B60L 58/27, H01M 10/63, H01M 10/6571, B60L 1/02, H01M 10/615, H01M 10/625

(54) **DEVICE FOR HEATING A TRACTION BATTERY AND METHOD FOR OPERATING A TRACTION BATTERY**
VORRICHTUNG ZUM ERWÄRMEN EINER TRAKTIONSBATTERIE UND VERFAHREN ZUM BETRIEB EINER TRAKTIONSBATTERIE
DISPOSITIF DE CHAUFFAGE D'UNE BATTERIE DE TRACTION ET PROCÉDÉ DE FONCTIONNEMENT D'UNE BATTERIE DE TRACTION

(43) Date of publication of application: 01.08.2018
(73) Proprietor: Robert Bosch GmbH, 70442 Stuttgart (DE); GS Yuasa International Ltd., Kyoto-shi, Kyoto 601-8520 (JP)
(72) Inventor: Gansemer, Michael, 74366 Kirchheim (DE); Woll, Christoph, 70839 Gerlingen (DE)
(74) Representative: Isarpatent

(56) References cited:
- EP-A1- 2 658 028
- EP-A1- 2 853 434
- WO-A1-2016/083529
- CN-A- 103 419 658
- DE-A1-102012 223 054
- DE-A1-102014 106 954
- DE-A1-102015 110 747
- DE-T5-112012 001 516
- US-A- 5 948 298
- US-A- 6 040 561
- US-A1- 2008 213 652
- US-A1- 2013 108 896
- US-A1- 2017 008 419

## Description

### Prior Art

The invention relates to a device for heating a traction battery of a vehicle, a supply device for supplying at least one traction motor of a vehicle with electric energy, and a method for operating a traction battery of a vehicle.

Recently, rechargeable battery cells, such as lithium ion cells, are used in different applications. For example, battery cells are installed in electric vehicles and hybrid electric vehicles to supply electric drive units of such vehicles with electric power. Several battery cells can be combined with each other to form a battery module of a modular battery. The battery cells of such a battery module are connected in series or in parallel. The battery modules are connected in series in one or more strings to form the modular battery.

In most cases, such batteries are operated at different and varying environmental temperatures. However, a performance of a battery is limited when the temperature of the battery is low. In particular, performance of the battery deteriorates with a decreasing battery temperature.

Solid-state lithium ion batteries are known comprising a solid-state electrolyte. Such batteries have higher energy densities. Chemical components of these batteries are highly active and generally are operated, for example, at temperatures above 70° C. Such batteries are known as mid-temperature batteries. Mid-temperature batteries have high electric resistances at low temperatures, i. e. they could not be operated at such low temperatures.

KR 2013/0099315 A discloses a preheater for the engine of a vehicle in an ignition condition for applying heat to an ignition unit according to the increase of a resistant value in a resistant body in order to preheat the engine in the ignition condition when the value of a transmitted electric current in a battery part is amplified into a positive value, thereby preventing the engine from not being ignited in cold weather.

US 2015/028019 A1 discloses a warm-up apparatus for a vehicle including a system which charges a battery by using an external power supply. The warm-up apparatus includes a heater for warming up, a current detector, a voltage detector and a resistance changer. The heater is mounted in the vehicle and produces heat by receiving electric power from the external power supply. The current detector detects an allowable current value of the external power supply. The voltage detector detects an output voltage value of the external power supply. The resistance changer changes an electric resistance value of the heater based on the allowable current value detected by the current detector and the output voltage value detected by the voltage detector.

EP 2 853 434 A1 relates to an electric vehicle charging system comprising: a drive battery which stores electric power for driving a motor of the electric vehicle; a heater which heats the drive battery; an electric power supply device which converts electric power supplied from outside the electric vehicle and supplies the electric power to the drive battery or the heater; a contactor which activates or deactivates a connection between the drive battery and the electric power supply device; temperature detection means which detects a temperature of the drive battery; and control means which controls the contactor and the heater based on the temperature detected by the temperature detection means, wherein the control means controls the contactor so as to deactivate the connection and conducts electricity to the heater when the temperature of the drive battery is less than a first predetermined temperature, and controls the contactor so as to activate the connection when the temperature of the drive battery is the first predetermined temperature or greater.

DE 10 2014 106 954 A1 relates to an apparatus for heating or cooling a battery pack. The apparatus comprises a heating element and a fluid cooling element, wherein the heating element is arranged directly on the fluid cooling element or on the side of the battery pack, where the fluid cooling element is located.

EP 2 658 028 A1 relates to a heating device comprising an electrical storage device, a warm-up unit configured to electrically connect to the electrical storage device and warm up the electrical storage device by power supplied from the electrical storage device, and a warm-up control unit configured to set the amount of power suppliable from the electrical storage device to a load by warming up the electrical storage device by the warm-up unit to be larger than the amount of power suppliable from the electrical storage device to the load when the electrical storage device is not warmed up by the warm-up unit.

DE 10 2012 223 054 A1 relates to a method and a system for thermal management of a high voltage battery of a vehicle. The battery is pre-heated with a heating fluid circulating in a heating circuit.

US 5948298 A describes a battery heating system for the batteries of an electrical vehicle includes a plurality of electrical heaters. The electrical heaters are apportioned into a plurality of groups, the groups coupled to independently-switchable voltage sources. One or more of the electrical heaters may have a parallel/series design for their resistive heater elements.

### Disclosure of the invention

It is an object of the present invention to improve operation of a traction battery of a vehicle.

This object is solved by the independent claims. Advantageous embodiments are disclosed in the following description, the dependent claims and the drawings, wherein these embodiments either by taken alone or in any combination of at least two embodiments with each other may relate to a preferred or advantageous aspect of the present invention, as defined by the appended claims. Embodiments of the device and the supply device may be embodiments of the method and vice versa, even if this is not explicitly disclosed in the following.

The present invention provides a device for heating a traction battery of a vehicle according to claim 1.

With the present invention, a traction battery of a vehicle can be heated to operate the traction battery in an optimal temperature range. Through this, the traction battery can quickly be brought to an optimal operation temperature. The traction battery can be heated to bring the traction battery to a desired operation temperature before the traction battery is used to supply the traction motor with electric energy. Further, the traction battery can be heated during a parking period, for example, when the environmental temperature is very low. This leads to a more uniform temperature distribution within the traction battery causing a more uniform deterioration of modules of the traction battery. In turn, this extents durability of the traction battery and less asymmetric module voltage levels occur due to the more uniform deterioration of the traction battery. This reduces cell and module balancing requirements.

Since, according to the present invention, at least one environmental parameter, at least one parameter of the traction battery and/or at least one parameter of the rechargeable battery are considered for heating the traction battery, it is possible to optimally utilize the available electric energy from the rechargeable battery, for example to realize a quick warm-up of the traction battery before the traction battery is used to supply electric energy to a traction motor. The traction battery may be heated after a specific driver input is received by the control unit. The driver input indicates that the driver wants to drive with the vehicle after a parking period. The driver input may be detected by the detection unit or by the control unit.

The rechargeable battery can be a starter battery and, for example, a lithium ion battery. In some cases, the rechargeable battery may also be used to supply electric energy to a traction battery, for example after a long parking period or if no battery-charging station is available. Preferably, the rechargeable battery comprises enough energy to heat the traction battery, even when the environmental temperature is for example -5° C or the like. The size of the rechargeable battery can be chosen according to the size of the traction battery, a cost aspect, the desired heating strategy and the desired heating time duration. The heating unit comprises at least one resistance heater generating heat when it is supplied with electric energy from the rechargeable battery.

The control unit may have a microcontroller and at least one electric memory device storing at least one algorithm and at least one characteristic diagram. There stored information can be used by the control unit to determine a suitable strategy for heating the traction battery. The control unit may comprise at least one switching section to control electric connection between the rechargeable battery and the heating unit. A required period for heating the traction battery up to a desired operation temperature can be determined by the control unit according to the parameters detected by the detection unit. The control unit may determine the respective heating strategy solely under consideration of at least one parameter of the traction battery and at least one parameter of the rechargeable battery.

The detection unit comprises a temperature sensor for detecting, as the environmental parameter, the environmental temperature. This temperature sensor may be an already available temperature sensor of the vehicle or a separate additional temperature sensor. The detection unit comprises at least one sensor unit for detecting at least one parameter of the traction battery. The sensor unit may be an already available sensor unit of the traction battery, for example of a battery management system or a balancing circuit of the traction battery, or a separate additional sensor unit. The detection unit comprises at least one sensor for detecting at least one parameter of the rechargeable battery.

The vehicle may be an electric vehicle, a hybrid electric vehicle, a water vehicle or an air vehicle, e.g. a plane.

The device comprising two or more heating units, with one heating unit per module of the traction battery, makes it possible to more uniformly heat the traction battery compared with the case, where only one heating unit is provided. The control unit is capable of individually connecting the rechargeable battery with the heating units. The number of heating units to be used for heating the traction battery is determined according to the parameters detected by the detection unit. For example, the number of heating units to be used for heating the traction battery can be determined according to a deterioration state of the traction battery, environmental parameters, parameters of the rechargeable battery and a driver input. Through this, the traction battery could be heated gently, what might be necessary when the environmental temperature is low and after a long parking period causing the temperature of the traction battery to be low.

If the heating units are alternately supplied with electric energy, heating of the traction battery is carried out gently. This has a positive effect on the durability of the traction battery. Further, alternately supplying the heating units with electric energy leads to a uniform and gently heating of the traction battery and therefore to a more uniform deterioration of modules of the traction battery. In turn, this extents durability of the traction battery and less asymmetric module voltage levels occur due to the more uniform deterioration of modules of the traction battery. This reduces cell and module balancing requirements.

The internal resistance of the traction battery is indicative of the deterioration state of the rechargeable battery.

According to the embodiment the detection unit is capable of detecting, as parameter of the rechargeable battery, a power of the rechargeable battery. This parameter and the state of charge indicate an actual state of the rechargeable battery.

The present invention provides a supply device according to claim 3.

The above described advantages of the device correspond to advantages of the supply device. The traction battery comprises at least two battery modules connected in series and each comprising several battery cells connected in series or in parallel. The traction battery may be a lithium ion traction battery. The traction battery may comprise at least two strings each comprising at least two battery modules connected in series. A string voltage and the number of battery modules used for supplying a traction motor with electric energy is varied depending on the requested power and the cruising range of the vehicle.

According to an advantageous embodiment the traction battery is a solid-state traction battery. This solid-state traction battery comprises a solid-state electrolyte.

The present invention provides a method for operating a traction battery of a vehicle according to claim 5.

The above described advantages of the device and the supply device correspond to advantages of the method. The device and the supply device according to any one of the above described embodiments or a combination of at least two of these embodiments with each other is used to perform the method. The heating device comprises at least one rechargeable battery and at least one heating unit being electrically connectable to the rechargeable battery.

In particular, modules of the traction battery are simultaneously or alternately heated by controlling the electric energy supply to each heating unit so that the heating units are simultaneously or alternately supplied with the electric energy. According to a further advantageous embodiment, as parameter of the rechargeable battery, a power of the rechargeable battery are detected. The above described advantages of the corresponding embodiment of the device correspondingly relate to this embodiment of the method.

According to a further advantageous embodiment the traction battery is heated during a parking period. For example, when the vehicle is parked for a longer period without being electrically connected to a battery-charging station, the traction battery is heated to a temperature that is lower than a temperature to which the traction battery is heated, when the vehicle is parked and electrically connected to a battery-charging station. By heating the traction battery during a parking period of the vehicle temperature variations acting upon the traction battery are limited and the traction battery can to a certain extend be held in a standby state.

According to a further advantageous embodiment the traction battery is warmed up before the traction battery is used for supplying at least one traction motor with electric energy. Depending on the respective parking time duration, that for example can be several days or weeks, and the respective environmental temperature, that for example can be -20° C, a warm-up phase can be performed upon receipt of a driver input and before the traction battery is used for supplying a traction motor with electric energy.

### Drawings

Further details, features and advantages of the invention are disclosed in the following description and the drawing showing:

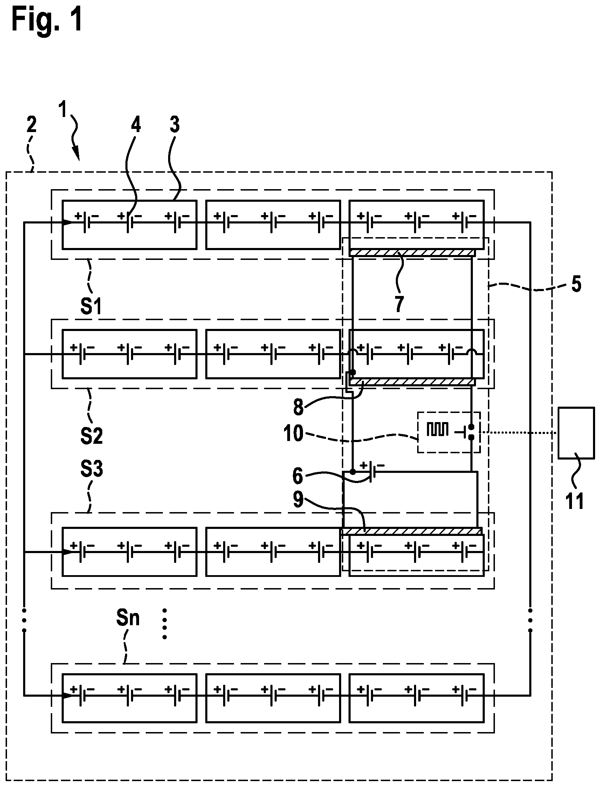

- Figure 1: a schematic view of an embodiment of a supply device according to the present invention.

### Preferred embodiments of the invention

Figure 1 shows a schematic view of an embodiment of a supply device 1 according to the present invention for supplying at least one traction motor (not shown) of a vehicle with electric energy.

The supply device 1 comprises a traction battery 2 connectable with the traction motor. The traction battery 2 comprises n strings S1 to Sn each having three battery modules 3 connected in series. Each battery module 3 comprises three battery cells 4 connected in series. The traction battery 2 is a solid-state lithium ion traction battery.

Further, the supply device 1 comprises a device 5 for heating the traction battery 2. The device 5 comprises a rechargeable battery 6 in form of a starter battery. Moreover, the device 5 comprises three heating units 7 to 9 each being arranged at one battery module 3 of traction battery 2. Alternately, the device 5 may also comprise heating units (not shown) for heating further battery modules 3 of the same strings S1 to Sn and/or different strings S1 to Sn.

Furthermore, the supply device 1 comprises a control unit 10 for controlling electric energy supply from the rechargeable battery 2 to the respective heating unit 7 to 9. The control unit 10 is capable of controlling the electric energy supply to each heating unit 7 to 9 so that the heating units 7 to 9 are simultaneously or alternately supplied with electric energy.

In addition, the supply device 5 comprises a detection unit 11 connected with the control unit 10 for detecting at least one environmental parameter, at least one parameter of the traction battery 2 and at least one parameter of the rechargeable battery 6. The control unit 10 controls the electric energy supply according to the parameters detected by the detection unit 11. The detection unit 11 may be capable of detecting, as parameter of the traction battery 2, a state of health and an internal resistance of the traction battery 2. The detection unit 11 may be capable of detecting, as parameter of the rechargeable battery 6, a state of charge and a power of the rechargeable battery 6.

With the control unit 10 different warm-up strategies could be realized. If the state of charge of the rechargeable battery 6 is high enough, for example > 95 %, if the environmental temperature is low, for example is -20° C, and if the rechargeable battery 6 is designed so that the traction battery 2 can start a traction system (not shown) of the vehicle, the control unit 10 controls the electric energy supply to each heating unit 7 to 9 so that the heating units 7 to 9 are alternately supplied with electric energy. In this case, the control unit 10 may determine a heating period for heating up the traction battery 2 to a desired operation temperature.

If the state of charge of the rechargeable battery 6 is high enough, for example > 95 %, if the environmental temperature is low, for example is -5° C, and if the rechargeable battery 6 has enough electric energy to supply several heating units 7 to 9 with electric energy, the control unit 10 controls the electric energy supply to each heating unit 7 to 9 so that the heating units 7 to 9 are simultaneously supplied with electric energy. In this case, the control unit 10 may determine a heating period for heating up the traction battery 2 to a desired operation temperature that is shorter than the heating period of the former case.

If the state of charge of the rechargeable battery 6 is lower, for example < 65 %, if the environmental temperature is low, for example is -5° C, and if the rechargeable battery 6 does not have enough electric energy to supply all heating units 7 to 9 with electric energy, the control unit 10 controls the electric energy supply to each heating unit 7 to 9 so that the heating units 7 to 9 are alternately supplied with electric energy. In this case, the control unit 10 may determine a heating period for heating up the traction battery 2 to a desired operation temperature that is longer than the heating periods of both former cases.

## Claims

1. A device (5) for heating a traction battery (2) of a vehicle, comprising:
- at least one rechargeable battery (6);
- at least two heating units (7, 8, 9) that can be arranged at a part of the traction battery (2);
- at least one control unit (10) for controlling electric energy supply from the rechargeable battery (6) to the heating unit (7, 8, 9); and
- at least one detection unit (11) connected with the control unit (10) for detecting at least one parameter of the traction battery (2) and at least one parameter of the rechargeable battery (6),
- wherein the control unit (10) controls the electric energy supply according to the parameters detected by the detection unit (11), wherein
- the rechargeable battery (6) is configured to supply electric energy to the traction battery (2) of the vehicle;
- the detection unit (11) is capable of detecting an environmental temperature,
as parameter of the traction battery (2), a state of health and an internal resistance of the traction battery (2), and
as parameter of the rechargeable battery (6), a state of charge of the rechargeable battery (6),
- the device (5) comprising two or more heating units (7, 8, 9), with one heating unit (7, 8, 9) per module (3) of the traction battery (2), wherein the control unit (10) is configured to control the electric energy supply to each heating unit (7, 8, 9) so that the heating units (7, 8, 9) are supplied with electric energy
(a) if the state of charge of the rechargeable battery (6) is higher than a particular value, the environmental temperature is lower than a particular temperature, and the rechargeable battery (6) has enough electric energy to supply several heating units (7, 8, 9) with electric energy, the control unit (10) controls the electric energy supply to each heating unit (7, 8, 9) so that the heating units (7, 8, 9) are simultaneously supplied with electric energy, and
(b) if the state of charge of the rechargeable battery (6) is lower than a particular value, the environmental temperature is lower than a particular temperature, and the rechargeable battery (6) does not have enough electric energy to supply all heating units (7, 8, 9) with electric energy, the control unit (10) controls the electric energy supply to each heating unit (7, 8, 9) so that the heating units (7, 8, 9) are alternately supplied with electric energy for uniformly heating up the traction battery.

2. The device (5) according to claim 1, wherein the detection unit (11) is capable of detecting, as parameter of the rechargeable battery (6), a power of the rechargeable battery (6).

3. A supply device (1) for supplying at least one traction motor of a vehicle with electric energy, comprising:
- at least one traction battery (2) connectable with the least one traction motor; and
- at least one device (5) according to claim 1 or 2.

4. The supply device (1) according to claim 3, wherein the traction battery (2) is a solid-state battery.

5. A method for operating a traction battery (2) of a vehicle, comprising the steps of:
- detecting an environmental temperature;
- detecting at least a state of health and an internal resistance of the traction battery (2), as parameter of the traction battery (2);
- detecting at least a state of charge of at least one rechargeable battery (6), as parameter of at least one rechargeable battery (6), wherein the rechargeable battery (6) is configured to supply electric energy to the traction battery (2) of the vehicle; and
- heating the traction battery (2) at least temporary according to the detected parameters,
- wherein modules (3) of the traction battery (2) are heated with electric energy supplied by the rechargeable battery (6)
(a) if the state of charge of the rechargeable battery (6) is higher than a particular value, the environmental temperature is lower than a particular temperature, and the rechargeable battery (6) has enough electric energy to supply several heating units (7, 8, 9) with electric energy, the electric energy supply to each heating unit (7, 8, 9) is controlled so that the heating units (7, 8, 9) are simultaneously supplied with electric energy, and
(b) if the state of charge of the rechargeable battery (6) is lower than a particular value, the environmental temperature is lower than a particular temperature, and the rechargeable battery (6) does not have enough electric energy to supply all heating units (7, 8, 9) with electric energy, the electric energy supply to each heating unit (7, 8, 9) is controlled so that the heating units (7, 8, 9) are alternately supplied with electric energy for uniformly heating up the traction battery.

6. The method according to claim 5, wherein, as parameter of the rechargeable battery (6), a power of the rechargeable battery (6) are detected.

7. The method according to claim 5 or 6, wherein the traction battery (2) is heated during a parking period.

8. The method according to any one of claims 5 to 7, wherein the traction battery (2) is warmed up before the traction battery (2) is used for supplying at least one traction motor with electric energy.

## Patentansprüche

1. Vorrichtung (5) zum Erwärmen einer Traktionsbatterie (2) eines Fahrzeugs, umfassend:
- mindestens eine wiederaufladbare Batterie (6);
- mindestens zwei Erwärmungseinheiten (7, 8, 9), die an einem Teil der Traktionsbatterie (2) angeordnet sein können;
- mindestens eine Steuereinheit (10) zum Steuern einer Zufuhr von elektrischer Energie von der wiederaufladbaren Batterie (6) zur Erwärmungseinheit (7, 8, 9); and
- mindestens eine Erfassungseinheit (11), die mit der Steuereinheit (10) verbunden ist, zum Erfassen mindestens eines Parameters der Traktionsbatterie (2) und mindestens eines Parameters der wiederaufladbaren Batterie (6),
- wobei die Steuereinheit (10) die Zufuhr elektrischer Energie
gemäß den von der Erfassungseinheit (11) erfassten Parametern steuert,
wobei
- die wiederaufladbare Batterie (6) zum Zuführen von elektrischer Energie zur Traktionsbatterie (2) des Fahrzeugs ausgelegt ist;
- die Erfassungseinheit (11) zum Erfassen einer Umgebungstemperatur,
eines Zustands und eines Innenwiderstands der Traktionsbatterie (2) als Parameter der Traktionsbatterie (2) und
eines Ladezustands der wiederaufladbaren Batterie (6) als Parameter der wiederaufladbaren Batterie (6) imstande ist,
- die Vorrichtung (5) zwei oder mehr Erwärmungseinheiten (7, 8, 9), mit einer Erwärmungseinheit (7, 8, 9) pro Modul (3) der Traktionsbatterie (2), umfasst, wobei die Steuereinheit (10) so ausgelegt ist, dass sie die Zufuhr elektrischer Energie zu jeder Erwärmungseinheit (7, 8, 9) so steuert, dass die Erwärmungseinheiten (7, 8, 9) mit elektrischer Energie versorgt werden, wobei,
(a) wenn der Ladezustand der wiederaufladbaren Batterie (6) höher als ein spezifischer Wert ist, die Umgebungstemperatur niedriger als eine spezifische Temperatur ist, und die wiederaufladbare Batterie (6) über genügend elektrische Energie zum Versorgen mehrerer Erwärmungseinheiten (7, 8, 9) mit elektrischer Energie verfügt, die Steuereinheit (10) die Zufuhr elektrischer Energie zu jeder Erwärmungseinheit (7, 8, 9) so steuert, dass die Erwärmungseinheiten (7, 8, 9) gleichzeitig mit elektrischer Energie versorgt werden, und,
(b) wenn der Ladezustand der wiederaufladbaren Batterie (6) niedriger als ein spezifischer Wert ist, die Umgebungstemperatur niedriger als eine spezifische Temperatur ist, und die wiederaufladbare Batterie (6) nicht über genügend elektrische Energie zum Versorgen aller Erwärmungseinheiten (7, 8, 9) mit elektrischer Energie verfügt, die Steuereinheit (10) die Zufuhr elektrischer Energie zu jeder Erwärmungseinheit (7, 8, 9) so steuert, dass die Erwärmungseinheiten (7, 8, 9) abwechselnd mit elektrischer Energie versorgt werden, um die Traktionsbatterie gleichmäßig zu erwärmen.

2. Vorrichtung (5) nach Anspruch 1, wobei die Erfassungseinheit (11) zum Erfassen einer Leistung der wiederaufladbaren Batterie (6) als Parameter der wiederaufladbaren Batterie (6) imstande ist.

3. Versorgungsvorrichtung (1) zum Versorgen mindestens eines Traktionsmotors eines Fahrzeugs mit elektrischer Energie, umfassend:
- mindestens eine Traktionsbatterie (2), die mit mindestens einem Traktionsmotor verbunden werden kann; und
- mindestens eine Vorrichtung (5) nach Anspruch 1 oder 2.

4. Versorgungsvorrichtung (1) nach Anspruch 3, wobei die Traktionsbatterie (2) eine Festkörperbatterie ist.

5. Verfahren zum Betreiben einer Traktionsbatterie (2), umfassend die folgenden Schritte:
- Erfassen einer Umgebungstemperatur;
- Erfassen eines Zustands und eines Innenwiderstands der Traktionsbatterie (2) als Parameter der Traktionsbatterie (2);
- Erfassen mindestens eines Ladezustands mindestens einer wiederaufladbaren Batterie (6) als Parameter mindestens einer wiederaufladbaren Batterie (6), wobei die wiederaufladbare Batterie (6) zum Zuführen von elektrischer Energie zur Traktionsbatterie (2) des Fahrzeugs ausgelegt ist; und
- wenigstens vorübergehendes Erwärmen der Traktionsbatterie (2) gemäß den erfassten Parametern,
- wobei Module (3) der Traktionsbatterie (2) mit elektrischer Energie erwärmt werden, die von der wiederaufladbaren Batterie (6) zugeführt wird, wobei,
(a) wenn der Ladezustand der wiederaufladbaren Batterie (6) höher als ein spezifischer Wert ist, die Umgebungstemperatur niedriger als eine spezifische Temperatur ist, und die wiederaufladbare Batterie (6) über genügend elektrische Energie zum Versorgen mehrerer Erwärmungseinheiten (7, 8, 9) mit elektrischer Energie verfügt, die Zufuhr elektrischer Energie zu jeder Erwärmungseinheit (7, 8, 9) so gesteuert wird, dass die Erwärmungseinheiten (7, 8, 9) gleichzeitig mit elektrischer Energie versorgt werden, und,
(b) wenn der Ladezustand der wiederaufladbaren Batterie (6) niedriger als ein spezifischer Wert ist, die Umgebungstemperatur niedriger als eine spezifische Temperatur ist, und die wiederaufladbare Batterie (6) nicht über genügend elektrische Energie zum Versorgen aller Erwärmungseinheiten (7, 8, 9) mit elektrischer Energie verfügt, die Zufuhr elektrischer Energie zu jeder Erwärmungseinheit (7, 8, 9) so gesteuert wird, dass die Erwärmungseinheiten (7, 8, 9) abwechselnd mit elektrischer Energie versorgt werden, um die Traktionsbatterie gleichmäßig zu erwärmen.

6. Verfahren nach Anspruch 5, wobei eine Leistung der wiederaufladbaren Batterie (6) als Parameter der wiederaufladbaren Batterie (6) erfasst wird.

7. Verfahren nach Anspruch 5 oder 6, wobei die Traktionsbatterie (2) während eines Parkzeitraums erwärmt wird.

8. Verfahren nach einem der Ansprüche 5 bis 7, wobei die Traktionsbatterie (2) erwärmt wird, bevor die Traktionsbatterie (2) zum Versorgen mindestens eines Traktionsmotors mit elektrischer Energie verwendet wird.

## Revendications

1. Dispositif (5) pour chauffer une batterie de traction (2) d'un véhicule, comprenant :
- au moins une batterie rechargeable (6) ;
- au moins deux unités de chauffage (7, 8, 9) qui peuvent être agencées sur une partie de la batterie de traction (2) ;
- au moins une unité de commande (10) pour commander l'alimentation en énergie électrique de la batterie rechargeable (6) vers l'unité de chauffage (7, 8, 9) ; et
- au moins une unité de détection (11) connectée à l'unité de commande (10) pour détecter au moins un paramètre de la batterie de traction (2) et au moins un paramètre de la batterie rechargeable (6),
- où l'unité de commande (10) commande l'alimentation en énergie électrique en fonction des paramètres détectés par l'unité de détection (11),
où
- la batterie rechargeable (6) est configurée pour fournir de l'énergie électrique à la batterie de traction (2) du véhicule ;
- l'unité de détection (11) est capable de détecter une température ambiante,
en tant que paramètre de la batterie de traction (2), un état de santé et une résistance interne de la batterie de traction (2), et
en tant que paramètre de la batterie rechargeable (6), un état de charge de la batterie rechargeable (6),
- le dispositif (5) comprenant deux ou plusieurs unités de chauffage (7, 8, 9), avec une unité de chauffage (7, 8, 9) par module (3) de la batterie de traction (2), où l'unité de commande (10) est configurée pour commander l'alimentation en énergie électrique de chaque unité de chauffage (7, 8, 9) de manière à ce que les unités de chauffage (7, 8, 9) soient alimentées en énergie électrique
(a) si l'état de charge de la batterie rechargeable (6) est supérieur à une valeur particulière, la température ambiante est inférieure à une température particulière, et la batterie rechargeable (6) a suffisamment d'énergie électrique pour alimenter plusieurs unités de chauffage (7, 8, 9) en énergie électrique, l'unité de commande (10) commande l'alimentation en énergie électrique de chaque unité de chauffage (7, 8, 9) de manière à ce que les unités de chauffage (7, 8, 9) soient simultanément alimentées en énergie électrique, et
(b) si l'état de charge de la batterie rechargeable (6) est inférieur à une valeur particulière, la température ambiante est inférieure à une température particulière et la batterie rechargeable (6) n'a pas suffisamment d'énergie électrique pour alimenter toutes les unités de chauffage (7, 8, 9) en énergie électrique, l'unité de commande (10) commande l'alimentation en énergie électrique de chaque unité de chauffage (7, 8, 9) de manière à ce que les unités de chauffage (7, 8, 9) soient alimentées alternativement en énergie électrique pour chauffer de manière uniforme la batterie de traction.

2. Dispositif (5) selon la revendication 1, dans lequel l'unité de détection (11) est capable de détecter, en tant que paramètre de la batterie rechargeable (6), une puissance de la batterie rechargeable (6).

3. Dispositif d'alimentation (1) pour alimenter au moins un moteur de traction d'un véhicule en énergie électrique, comprenant :
- au moins une batterie de traction (2) pouvant être connectée à au moins un moteur de traction ; et
- au moins un dispositif (5) selon la revendication 1 ou la revendication 2.

4. Dispositif d'alimentation (1) selon la revendication 3, dans lequel la batterie de traction (2) est une batterie à semi-conducteur.

5. Procédé pour faire fonctionner une batterie de traction (2) d'un véhicule, le procédé comprenant les étapes suivantes :
- détecter une température ambiante ;
- détecter au moins un état de santé et une résistance interne de la batterie de traction (2), en tant que paramètre de la batterie de traction (2) ;
- détecter au moins un état de charge d'au moins une batterie rechargeable (6), en tant que paramètre d'au moins une batterie rechargeable (6), où la batterie rechargeable (6) est configurée pour fournir de l'énergie électrique à la batterie de traction (2) du véhicule ; et
- chauffer la batterie de traction (2) au moins de manière temporaire en fonction des paramètres détectés,
- où les modules (3) de la batterie de traction (2) sont chauffés avec l'énergie électrique fournie par la batterie rechargeable (6)
(a) si l'état de charge de la batterie rechargeable (6) est supérieur à une valeur particulière, la température ambiante est inférieure à une température particulière, et la batterie rechargeable (6) a suffisamment d'énergie électrique pour alimenter plusieurs unités de chauffage (7, 8, 9) en énergie électrique, l'alimentation en énergie électrique de chaque unité de chauffage (7, 8, 9) est commandée de manière à ce que les unités de chauffage (7, 8, 9) soient simultanément alimentées en énergie électrique, et
(b) si l'état de charge de la batterie rechargeable (6) est inférieur à une valeur particulière, la température de l'environnement est inférieure à une température particulière, et la batterie rechargeable (6) n'a pas assez d'énergie électrique pour alimenter toutes les unités de chauffage (7, 8, 9) en énergie électrique, l'alimentation en énergie électrique de chaque unité de chauffage (7, 8, 9) est commandée de manière à ce que les unités de chauffage (7, 8, 9) soient alimentées alternativement en énergie électrique pour chauffer de manière uniforme la batterie de traction.

6. Procédé selon la revendication 5, dans lequel, en tant que paramètre de la batterie rechargeable (6), une puissance de la batterie rechargeable (6) est détectée.

7. Procédé selon la revendication 5 ou la revendication 6, dans lequel la batterie de traction (2) est chauffée pendant une période de stationnement.

8. Procédé selon l'une quelconque des revendications 5 à 7, dans lequel la batterie de traction (2) est chauffée avant que la batterie de traction (2) soit utilisée pour alimenter au moins un moteur de traction en énergie électrique.
